(19) Europäisches Patentamt / European Patent Office / Office européen des brevets

(11) **EP 2 616 786 B1**

(12) **EUROPEAN PATENT SPECIFICATION**

(45) Date of publication and mention
of the grant of the patent:
**02.03.2016 Bulletin 2016/09**

(21) Application number: **11773116.6**

(22) Date of filing: **15.09.2011**

(51) Int Cl.:
**G01L 5/04** (2006.01)   **B63B 21/00** (2006.01)

(86) International application number:
**PCT/GB2011/051739**

(87) International publication number:
**WO 2012/035354 (22.03.2012 Gazette 2012/12)**

(54) **METHOD OF DETERMINING THE TENSION IN A MOORING LINE**

VERFAHREN ZUR BESTIMMUNG DER SPANNUNG EINER FESTMACHERLEINE

PROCÉDÉ DE DÉTERMINATION DANS LA TENSION D'UN CÂBLE D'AMARRAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.05.2011 GB 201107229
15.09.2010 GB 201015421**

(43) Date of publication of application:
**24.07.2013 Bulletin 2013/30**

(73) Proprietor: **Catenary Testing Limited
Inverness IV2 3NN (GB)**

(72) Inventor: **JAMIESON, Angus
Inverness IV2 3QG (GB)**

(74) Representative: **Lincoln, Matthew
Lincoln IP
9 Victoria Street
Aberdeen AB10 1XB (GB)**

(56) References cited:
**GB-A- 1 241 776     US-A1- 2009 084 302**

**Description**

The present invention relates to the field of anchoring marine assets. More specifically, the present invention concerns methods of determining the tension in a mooring line employed to anchor a marine asset such as an oil rig, crane barge or offshore wind turbine. These methods also provide a means for calibrating a mooring line tension meter.

Background to the invention

There are an increasing number of marine assets that require anchoring (particularly as interest in deep water operations grows); for example oil rigs, crane barges and offshore wind turbines. Such assets are typically anchored to the seabed. The marine asset is generally attached to an anchor by a corresponding mooring line (also known as an anchor rode or anchor line). Mooring lines usually consist of a line, cable or chain.

Many of these marine assets, such as oil rigs, ships and offshore wind turbines, are anchored in areas where the seabed or land below the asset has pipelines or other hazards in the immediate vicinity. These marine assets have to maintain their position and elevation and, to do this, they normally have a number of mooring lines, typically eight or twelve, which are led from winches placed around the asset to anchors some distance away. In shallow waters (typically 25m or less) the anchors are normally placed some ten times as far from the asset as the water is deep. However, in deeper waters (e.g. greater than 25m) this can reduce to around a factor of three. A considerable area beneath the marine asset is therefore affected by the presence of these mooring lines.

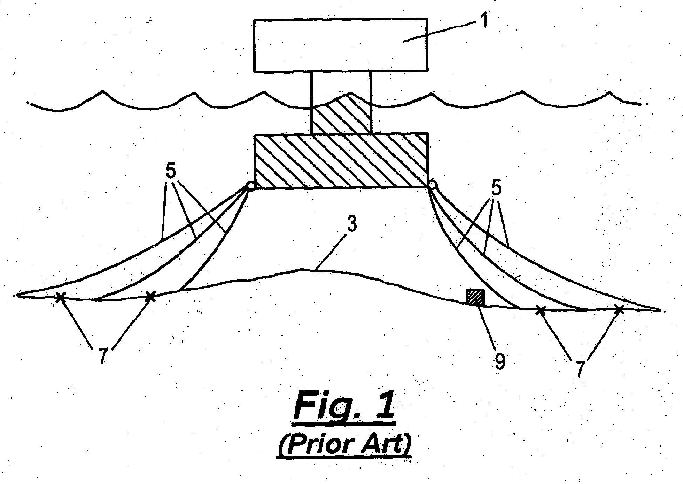

Figure 1 illustrates a marine asset, in this case an oil rig 1, moored on the seabed 3 by way of several mooring lines 5 and corresponding anchors 7 (not all visible), and a pipeline 9 (indicated schematically) presenting a hazard in the vicinity. As a general rule, a mooring line 5 is several times longer than the vertical distance from the asset to the anchor, and as a result the mooring lines form a curve between the asset and the anchor (or the seabed where the mooring line makes contact). The naturally occurring curve improves anchor performance, particularly in the case of large assets in deep water, by producing a lower angle of pull on the anchor. However, the risk of contact with a hazard (such as the notional pipeline 9 indicated) is clearly increased.

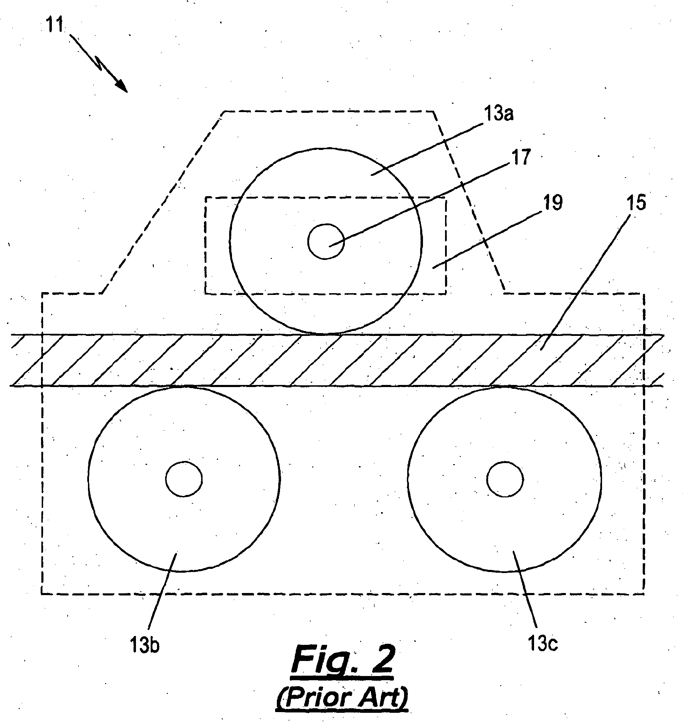

In order to monitor the tension in a mooring line, for example to prevent it from contacting a pipeline or other hazard located below the marine asset, it is normal practice to attach a tension meter to each associated winch or asset attachment. Figure 2 illustrates a typical running line tensiometer 11 comprising three sheaves 13a, 13b, 13c disposed around a mooring line 15. Tension in the mooring line 15 is measured by way of a load pin 17 on the uppermost sheave 13a and associated instrumentation which converts a displacement of the load pin into a measure of tension.

At various times during their operational lifetime, tension meters have to be calibrated. Typically this is achieved by boarding the asset and independently checking the tension at each winch by temporarily attaching a calibrated tension meter, for example a tension link that provides a measure of tension by which the permanent tension meter can be calibrated. The calibration process is time consuming and during these periods it is also necessary for all normal operations (e.g. drilling or production) on the marine asset to be suspended. Additional manpower is also required, or may need to be diverted from other operations, to connect the calibrated tension meter to the winch line and winch time to complete the calibration procedure.

or operating a drilling platform may be in the region of several hundred thousand US$ per day, so it is essential to minimise downtime. Furthermore, small production rigs may produce thousands of barrels of oil equivalent per day (boepd) of oil and gas, while some of the world's largest production rigs produce several tens of thousands boepd of oil and gas. If one takes into account that there are approximately five hundred oil rigs stationed in waters around the world and that calibration tests have to be conducted approximately every two years, then the potential loss of revenue when production, or drilling, is temporarily ceased is extremely significant.

It is recognised in the present invention that considerable advantage is to be gained in the provision of a method of calibrating a tension meter attached to a mooring line of a marine asset which does not require the suspension of the normal operations of the marine asset.

Proposals have been made to use inclinometers on mooring lines or chains as an alternative to a running line tensiometer, for example as described in US 3,722,268, US 3,810,081 or WO 2007/079556.

However, these methodologies have inherent limitations. Firstly, they all require provision of equipment on the line between the winch and the anchor, and usually at a location close to the winch. The additional equipment increases the capital expense of the system, and may require diver deployment, maintenance or retrieval. In addition, this equipment interferes with the ability of the master of the vessel to pay-in the line if the line needs to be re-tensioned, for example due to anchor drag. The methods are not suitable for use in bad weather. Furthermore, although the equipment of US 3,722,268, US 3,810,081 or WO 2007/079556 may be suitable for detecting large changes to the tension (for example due to the break of a line or anchor drag) they are insufficiently accurate to allow calibration of a tension meter. This problem exacerbated in deepwater and/or for large marine assets, conditions in which the tension measurement is highly sensitive to errors in the measured chain angle. At typical tensions for marine assets used in the hydrocarbon exploration and production industry (for example in excess of 25 tonnes and typically 40 to 60 tonnes) the systems of US 3,722,268, US 3,810,081 or WO 2007/079556 are ineffective.

GB 1241776 also discloses a load indicator for a mooring line which uses catenary line relationships to indicate the load in the mooring line. US 2009/0084302 discloses a system which uses an inclinometer to determine permanent elongation of a mooring line.

Accordingly, it is an object of at least one aspect of the present invention to provide a method of determining the tension in a mooring line of a marine asset which may be performed during normal operations.

It is a further object of at least one aspect of the invention to provide a corresponding method of calibrating a tension meter attached to a mooring line of a marine asset.

Another object of at least one aspect of the invention to provide a method of calibrating a tension meter attached to a mooring line of a marine asset which is applicable to marine assets used in the oil and gas hydrocarbon exploration and production industry and/or in deepwater conditions.

Further aims and objects of the invention will become apparent from reading the following description.

Summary of Invention

According to a first aspect of the present invention there is provided a method of determining the tension in a mooring line of a marine asset, the method comprising determining at least one characteristic of a catenary trajectory formed by the mooring line and determining the tension in the mooring line based on the at least one characteristic.

The above method provides a method of determining the tension in a mooring line that does not require fitting additional equipment to the mooring line that would necessitate cessation of, for example, drilling or production operations or energy capture. Note that the skilled person may also use the term "catenary curve" to describe a catenary trajectory and the terms curve and trajectory may be used interchangeably.

This ability to measure the tension and calibrate the mooring line during normal operations provides significant savings for the operator of the marine asset. For example, a tension can be determined and/or a tension meter on the asset can be calibrated during one or more operations selected from the group consisting of: drilling; wellbore construction and/or completion of the well; well clean-up; well intervention and/or workover; well and/or reservoir stimulation; injection; well testing; and/or hydrocarbon production.

Preferably, determining at least one characteristic of a catenary trajectory formed by the mooring line comprises determining at least one characteristic of the catenary trajectory to generate characteristic data.

Preferably, determining the tension in the mooring line comprises receiving the characteristic data in a computer processor, processing the data to determine the tension in the mooring line, and outputting tension data from the computer processor.

Optionally determining at least one characteristic of the catenary trajectory formed by the mooring line comprises determining a shape of the catenary trajectory. The shape of the catenary trajectory formed by the mooring line is characteristic of the mooring line having a unique tension applied thereto. Optionally, determining at least one characteristic of the catenary trajectory comprises measuring the depth of the mooring line at a known distance from the asset.

Optionally, the method comprises generating a set of catenary trajectories for a range of values of tension. Preferably, determining the tension in the mooring line comprises identifying a generated catenary trajectory that corresponds with the at least one characteristic of the catenary trajectory formed by the mooring line.

Optionally, the method is repeated and a mean value of the tension in the mooring line determined.

Alternatively, or additionally, determining at least one characteristic of the catenary trajectory comprises measuring a first depth of the mooring line at a first known distance from the asset, measuring a second depth of the mooring line at a second known distance from the asset, and identifying a generated catenary trajectory that corresponds with the first and second depths of the catenary trajectory formed by the mooring line.

Optionally, determining at least one characteristic of the catenary trajectory comprises measuring a third depth of the mooring line at a third known distance from the asset.

Further alternatively, or additionally, determining at least one characteristic of the catenary trajectory comprises determining an elastic response of the mooring line. An elastic response of the mooring line corresponds directly to a particular tension being applied thereto.

Optionally, determining an elastic response of the mooring line comprises generating a set of elastic response profiles for a range of tension values, measuring an elastic response profile of the mooring line, and identifying a generated elastic response profile that corresponds with the measured elastic response profile.

Preferably, measuring an elastic response profile comprises determining a displacement between a connection point on the asset at one end of the mooring line and an anchor point at the opposite end of the mooring line, and determining the change in tension on the mooring line effected by the displacement.

Most preferably, determining a displacement comprises determining a horizontal displacement. Alternatively, or additionally, determining a displacement comprises determining a vertical displacement.

Optionally, the method is repeated periodically. Alternatively, the method is repeated continuously.

An alternative method of determining the catenary shape to derive tension comprises:

capturing an image of a portion of a mooring line between a connection point on the marine asset and a surface of the water;

analysing the image in a computer processor to determine the angle subtended by the mooring line at the connection point;

determining the tension in the mooring line from the determined angle.

The method may comprise determining the vertical height of the connection point of the mooring line; determining the length of the mooring line between the connection point and the water surface; and calculating the angle subtended by the mooring line at the connection point from the height and the length.

The method may comprise determining the length of the mooring line between the connection point and the water surface by counting the number of chain links between the connection point and the water surface. Preferably, analysing the image in the computer processor comprises counting the number of chain links between the connection point and the water surface.

Alternatively, or in addition, the method may comprise analysing the foreshortening of the chain links in the computer processor to determine the angle subtended by the mooring line at the connection point.

According to a second aspect of the present invention there is provided a method of calibrating a tension meter arranged to measure the tension in a mooring line of a marine asset, the method comprising:

determining at least one characteristic of the catenary trajectory formed by the mooring line;

determining the tension in the mooring line based on the at least one characteristic; and comparing the determined tension with a corresponding tension measurement from the tension meter.

The above method provides an unobtrusive, contactless method for calibrating a tension meter. Importantly the method avoids the need for operation of the marine asset to be interrupted; e.g. there is no need to stop the drilling process on an oil rig or to halt energy capture on an offshore wind turbine so as to calibrate the mooring line tension meters.

The method may be carried out during normal operations of the marine asset. The method may be carried out during one or more operations selected from the group consisting of: drilling; wellbore construction and/or completion of a well; well clean-up; well intervention and/or workover; well stimulation and/or reservoir stimulation; wellbore and/or reservoir injection; well testing; and hydrocarbon production.

Optionally determining the characteristic of the catenary trajectory formed by the mooring line comprises determining a shape of the catenary trajectory. The shape of the catenary trajectory formed by the mooring line is characteristic of the mooring line having a unique tension applied thereto.

Determining the shape of the catenary trajectory may comprise:

calculating a set of catenary trajectories between a connection point of the asset and an anchor point of the mooring line for a particular seabed profile;

measuring a depth of the mooring line at a known distance from the connection point; identifying a catenary trajectory corresponding to the known distance and measured depth.

The connection point may, for example, be a fairlead point or the position of a winch to which the mooring line is attached.

Alternatively determining the shape of the catenary trajectory comprises:

measuring a first depth of the mooring line at a first known distance from a connection point;

measuring a second depth of the mooring line at a second known distance from the connection point; and

identifying a catenary trajectory corresponding to the first and second known distances and measured depths.

Optionally determining the shape of the catenary trajectory further comprises measuring a third depth of the mooring line at a third known distance from the connection point.

Alternatively determining the characteristic of the catenary trajectory formed by the mooring line comprises determining an elastic response of the mooring line. The elastic response of the mooring line corresponds to the mooring line having a unique tension applied thereto.

Determining the elastic response of the mooring line may comprise:

calculating a set of elastic response profiles for the mooring line and a particular seabed profile for a range of mooring line tensions; and
measuring the elastic response profile induced upon the mooring line; and
comparing the measured elastic response profiles with the set of calculated elastic response profiles.

Measuring the elastic response profile induced upon the mooring line may comprise: measuring the relative displacement of a connection point of the mooring line from an anchor point;
measuring the changing tension induced by the relative movement.

Preferably measuring the changing tension comprises observing the output of the tension meter.

Preferably the method of calibrating the tension meter further comprises:

changing the tension in the mooring line;
determining the characteristic of the catenary trajectory formed by the mooring line so as to identify the tension in the mooring line after the change; and
comparing the calculated tension with that observed from the tension meter.

The method of calibrating the tension meter preferably comprises determining a scale factor correction for the tension meter.

The method of calibrating the tension meter preferably comprises determining a bias error for the tension meter.

Alternatively, determining the tension of the mooring line comprises comparing the at least one characteristic of the catenary trajectory with an appropriate look-up table.

Optionally, the method is repeated periodically. Alternatively, the method is repeated continuously.

The method may comprise determining the length of the mooring line between the connection point and the water surface by counting the number of chain links between the connection point and the water surface. Preferably, analysing the image in the computer processor comprises counting the number of chain links between the connection point and the water surface.

Alternatively, or in addition, the method may comprise analysing the foreshortening of the chain links in the computer processor to determine the angle subtended by the mooring line at the connection point.

Embodiments of the second aspect of the invention may comprise features to implement the preferred or optional features of the first aspect of the invention or vice versa.

According to a third aspect of the present invention there is provide a method for determining the tension in a mooring line of a marine asset the method comprising:

generating a set of catenary trajectories between a connection point on the asset and an anchor point of the mooring line for a particular seabed profile and a plurality of tension values;
measuring a depth of the mooring line at a known distance from the connection point; identifying a generated catenary trajectory corresponding to the known distance and measured depth.

Embodiments of the third aspect of the invention may comprise features to implement the preferred or optional features of the first or second aspects of the invention or vice versa.

According to a fourth aspect of the present invention there is provided a method for measuring the tension in a mooring line of a marine asset the method comprising:

measuring a first depth of the mooring line at a first known distance from a connection point on the asset;
measuring a second depth of the mooring line at a second known distance from the connection point on the asset; and
identifying a catenary trajectory corresponding to the first and second known distances and measured depths.

Optionally the method for measuring the tension in a mooring line further comprises measuring a third depth of the mooring line at a third known distance from the connection point.

Optionally, the method is repeated periodically. Alternatively, the method is repeated continuously.

Embodiments of the fourth aspect of the invention may comprise features to implement the preferred or optional features of the first, second or third aspects of the invention or vice versa.

According to a fifth aspect of the present invention there is provide a method for determining the tension in a mooring line of a marine asset the method comprising:

calculating a set of elastic response profiles for the mooring line and a particular seabed profile for a range of mooring line tensions; and
measuring the elastic response profile induced upon the mooring line; and
comparing the measured elastic response profiles with the set of calculated elastic response profiles.

Optionally, the method is repeated periodically. Alternatively, the method is repeated continuously.

Embodiments of the fifth aspect of the invention may comprise features to implement the preferred or optional features of the first, second, third or fourth aspects of the invention or vice versa.

According to a sixth aspect of the present invention there is provided a method of determining the tension in a mooring line of a marine asset, the method comprising receiving at least one characteristic of a catenary trajectory formed by the mooring line and determining the tension in the mooring line based on the at least one received characteristic.

Embodiments of the sixth aspect of the invention may comprise features to implement the preferred or optional features of the first, second, third, fourth or fifth aspects of the invention or vice versa.

According to a seventh aspect of the present invention, there is provided a computer program for instructing a computer to perform the method of any of the first to fifth aspects of the invention when executed.

Optionally, the computer program comprises a generation module configured to generate a set of catenary trajectories, a measurement module configured to provide a measurement of at least one characteristic of the catenary trajectory formed by the mooring line, and a processing module adapted to determine which generated-trajectory corresponds to the at least one characteristic and output a corresponding tension value.

Alternatively, the computer program comprises a measurement module configured to provide a measurement of at least two characteristics of the catenary trajectory formed by the mooring line, and a processing module adapted to identify a catenary trajectory that corresponds to the at least two characteristics and output a corresponding tension value.

Further alternatively, the computer program comprises a measurement module configured to provide a measurement of displacement of the asset and a measurement of a corresponding change in tension, a generation module configured to generate a set of elastic profiles, and a processing module configured to determine an elastic profile of the mooring line and to determine which generated elastic profile corresponds to the determined elastic profile and output a corresponding tension value.

Optionally, the computer software comprises a seabed profile module configured to provide information relating to a seabed profile. Optionally, the seabed profile module is comprised in the measurement module.

Preferably, the computer program further comprises a calibration module configured to calibrate a tension meter based on the tension value.

Embodiments of the seventh aspect of the invention may comprise features to implement the preferred or optional features of the first, second, third, fourth, fifth or sixth aspects of the invention or vice versa.

According to an eighth aspect of the present invention there is provided a method of determining the tension in a mooring line of a marine asset, the method comprising:

determining at least one characteristic of a catenary trajectory formed by the mooring line to generate catenary characteristic data;
receiving the catenary characteristic data in one or more computer processors; and processing the catenary characteristic data using the one or more computer processors to determine the tension in the mooring line.

The method may comprise outputting and/or displaying tension data from at least one of the one or more computer processors.

Optionally, processing the catenary characteristic data comprises generating a set of catenary trajectories for a range of values of tension and identifying a generated catenary trajectory that corresponds with the catenary characteristic data using at least one of the one or more computer processors.

Alternatively, processing the catenary characteristic data comprises generating a set of elastic response profiles for a range of values of tension and identifying a generated elastic response profile that corresponds with the catenary characteristic data using at least one of the one or more computer processors.

Optionally, the method is repeated periodically. Alternatively, the method is repeated continuously.

Embodiments of the eighth aspect of the invention may comprise features to implement the preferred or optional features of the first, second, third, fourth, fifth, sixth or seventh aspects of the invention or vice versa.

According to a ninth aspect of the present invention there is provided a method of calibrating a tension meter arranged to measure the tension in a mooring line of a marine asset, the method comprising:

determining at least one characteristic of a catenary trajectory formed by the mooring line to generate catenary characteristic data;
receiving the catenary characteristic data in one or more computer processors;
processing the catenary characteristic data using the one or more computer processors to determine the tension in the mooring line; and
comparing the determined tension with corresponding tension measurement data from the tension meter to generate calibration data.

The method may comprise outputting and/or displaying the calibration data from at least one of the one or more computer processors.

The method may be carried out during normal operations of the marine asset. The method may be carried out during one or more operations selected from the group consisting of: drilling; wellbore construction and/or completion of a well; well clean-up; well intervention and/or workover; well stimulation and/or reservoir stimulation; wellbore and/or reservoir injection; well testing; and hydrocarbon production.

Embodiments of the ninth aspect of the invention may comprise features to implement the preferred or optional features of the first, second, third, fourth, fifth, sixth, seventh or eighth aspects of the invention or vice versa.

According to a tenth aspect of the present invention there is provided a method for determining the position of a mooring line of a marine asset the method comprising:

calculating a set of elastic response profiles for the mooring line and a particular seabed profile for a range of mooring line tensions; and
measuring the elastic response profile induced upon the mooring line; and
comparing the measured elastic response profiles with the set of calculated elastic response profiles.

The method may be carried out during normal operations of the marine asset. The method may be carried out during one or more operations selected from the group consisting of: drilling; wellbore construction and/or completion of a well; well clean-up; well intervention and/or workover; well stimulation and/or reservoir stimulation; wellbore and/or reservoir injection; well testing; and hydrocarbon production.

Embodiments of the tenth aspect of the invention may comprise features to implement the preferred or optional features of the first, second, third, fourth, fifth, sixth, seventh, eighth or ninth aspects of the invention or vice versa.

According to an eleventh aspect of the present invention there is provided a method of determining the tension in a mooring line of a marine asset, the method comprising:

determining an elastic response of the mooring line; and
determining the tension in the mooring line from the elastic response of the mooring line.

The method may be carried out during normal operations of the marine asset. The method may be carried out during one or more operations selected from the group consisting of: drilling; wellbore construction and/or completion of a well; well clean-up; well intervention and/or workover; well stimulation and/or reservoir stimulation; wellbore and/or reservoir injection; well testing; and hydrocarbon production.

Embodiments of the eleventh aspect of the invention may comprise features to implement the preferred or optional features of the first, second, third, fourth, fifth, sixth, seventh, eighth, ninth or tenth aspects of the invention or vice versa.

According to a twelfth aspect of the present invention there is provided a method computer program for instructing a computer to perform the method of the eleventh aspect of the invention when executed.

The computer program may comprise a measurement module configured to provide a measurement of displacement of the asset and a measurement of a corresponding change in tension, and/or may comprise a generation module configured to generate a set of elastic response profiles. The computer program may comprise a processing module configured to determine an elastic response profile of the mooring line and to determine which generated elastic response profile corresponds to the determined elastic response profile and output a corresponding tension value.

The computer program may comprise a seabed profile module configured to provide information relating to a seabed profile. The seabed profile module may be comprised in the measurement module.

The computer program may comprise a calibration module configured to calibrate a tension meter based on the tension value.

Embodiments of the twelfth aspect of the invention may comprise features to implement the preferred or optional features of any of the first to eleventh aspects of the invention or vice versa.

According to a thirteenth aspect of the present invention there is provided a method of determining the tension in a mooring line of a marine asset, the method comprising:

determining at least one characteristic of a catenary trajectory formed by the mooring line to generate catenary characteristic data;
receiving the catenary characteristic data in one or more computer processors; and
processing the catenary characteristic data using the one or more computer processors to determine the tension in the mooring line

wherein processing the catenary characteristic data comprises generating a set of elastic response profiles for a range of values of tension and identifying a generated elastic response profile that corresponds with the catenary characteristic data using at least one of the one or more computer processors.

The method may comprise outputting and/or displaying tension data from at least one of the one or more computer processors.

According to a thirteenth aspect of the present invention there is provided a method of calibrating a tension meter arranged to measure the tension in a mooring line of a marine asset, the method comprising:

determining at least one characteristic of a catenary trajectory formed by the mooring line to generate catenary characteristic data;

receiving the catenary characteristic data in one or more computer processors;

processing the catenary characteristic data using the one or more computer processors to determine the tension in the mooring line; and

comparing the determined tension with corresponding tension measurement data from the tension meter to generate calibration data,

wherein processing the catenary characteristic data comprises generating a set of elastic response profiles for a range of values of tension and identifying a generated elastic response profile that corresponds with the catenary characteristic data using at least one of the one or more computer processors.

The method may comprise outputting and/or displaying the calibration data from at least one of the one or more computer processors.

According to a fourteenth aspect of the present invention there is provided a method of determining the position of one or more mooring lines of a marine asset, the method comprising carrying out the method of any of any previous aspect of the invention, and deriving the position of the one or more mooring lines from a determined tension.

The method may comprise generating a display of the position of the one or more mooring lines. The method may be carried out during normal operations of the marine asset. The method may be carried out during one or more operations selected from the group consisting of: drilling; wellbore construction and/or completion of a well; well clean-up; well intervention and/or workover; well stimulation and/or reservoir stimulation; wellbore and/or reservoir injection; well testing; and hydrocarbon production.

According to a fifteenth aspect of the present invention there is provided a method of monitoring the position of one or more mooring lines of a marine asset, the method comprising:

calibrating a tension meter of the marine asset according to the methods of any previous aspect of the invention at a first time;

determining the position of the one or more mooring lines at the first time;

recalibrating the a tension meter of the marine asset according to the methods any previous aspect of the invention at a second later time; and

determining the position of the one or more mooring lines at the second later time.

According to a sixteenth aspect of the present invention there is provided a method of producing a real-time representation of the position of one or more mooring lines of a marine asset, the method comprising repeating the method of the fifteenth aspect at a plurality of time intervals.

The method may be carried out during normal operations of the marine asset. The method may be carried out during one or more operations selected from the group consisting of: drilling; wellbore construction and/or completion of a well; well clean-up; well intervention and/or workover; well stimulation and/or reservoir stimulation; wellbore and/or reservoir injection; well testing; and hydrocarbon production.

Embodiments of the thirteenth to sixteenth aspects of the invention may comprise features to implement the preferred or optional features of any of the previous aspects of the invention or vice versa.

The methods of the various aspects of the invention and/or the critical steps thereof are preferably implemented in software, although it will be understood that the methods or steps thereof may also be implemented in firmware or hardware or in combinations of software, firmware or hardware.

Brief Description of Drawings

Aspects and advantages of the present invention will become apparent upon reading the following detailed description and upon reference to the following drawings (like reference numerals referring to like features) in which:

Figure 1 presents a schematic representation of a marine asset moored on the seabed by a number of mooring lines and anchors;

Figure 2 presents a schematic representation of a running line tensiometer typical of the state of the art;

Figure 3 presents a schematic representation of a method of measuring the tension in a mooring line in accordance with an embodiment of the present invention;

Figure 4 presents a graph showing three different catenary trajectories and the forces acting thereon;

Figure 5 provides a flow diagram illustrative of the method of determining the tension within the mooring line in accordance with the embodiment of the present invention presented in Figure 3;

Figure 6 illustrates in schematic form a simplified process diagram representative of computer software configured to perform a method of determining the tension within the mooring line in accordance with the embodiment of the present invention presented in Figure 3 and Figure 5;

Figure 7 presents a schematic representation of a method of measuring the tension in a mooring line in accordance with an alternative embodiment of the present invention;

Figure 8 provides a flow diagram illustrative of the method of determining the tension within the mooring line in accordance with the alternative embodiment of the present invention presented in Figure 7;

Figure 9 illustrates in schematic form a simplified process diagram representative of computer software configured to perform a method of determining the tension within the mooring line in accordance with the embodiment of the present invention presented in Figure 7 and Figure 8;

Figure 10 provides a flow diagram illustrative of a method of calibrating one or more tension meters in accordance with an embodiment of the present invention;

Figure 11 presents a schematic representation of a method of measuring the tension in a mooring line in accordance with a further alternative embodiment of the present invention; and

Figure 12 provides a flow diagram illustrative of the method of determining the tension within the mooring line in accordance with the alternative embodiment of the present invention presented in Figure 11.

Detailed Description

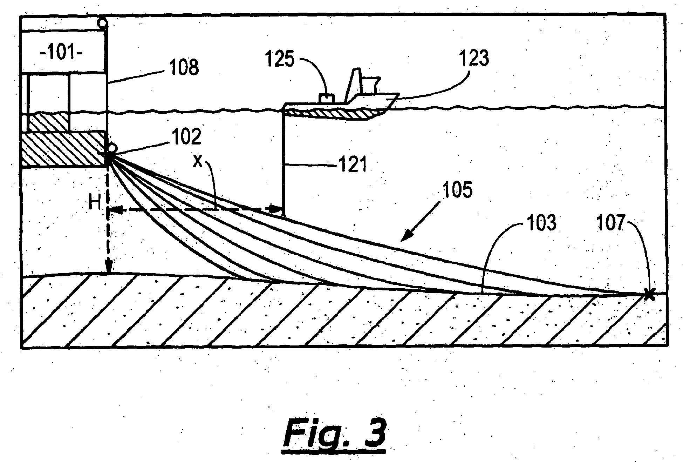

There now follows a description of a first method of determining the tension in a mooring line in accordance with at least one aspect of the present invention. Figure 3 illustrates an exemplary implementation of said method. Figure 3 illustrates a marine asset 101, in this example an oil rig, moored to the seabed 103 via connection point 102 (for example, a fairlead point) by a number of mooring lines 105.

A depth measurement apparatus 121 is suspended from a ship 123 and provides a preferably non-contact means for determining the depth of a particular mooring line 105 at a predetermined distance x from the marine asset 101. The depth measurement apparatus 121 may comprise a magnetometer, an echo sounder, a camera located on a wireline, or any other suitable means for determining the depth of the mooring line.

Mooring lines, which are usually chains or cables, take the form of a catenary trajectory between the asset and the point at which.they touch the seabed (or connect to the anchor) and this trajectory and its grounding point are dependent upon the tension in the chain or cable. The shape of the catenary trajectory is dependent on a number of conditions such as tension, water depth, mooring weight, design, tidal flow, etc. As noted above, the skilled person may also use the term "catenary curve" to describe a catenary trajectory and the terms may be used interchangeably.

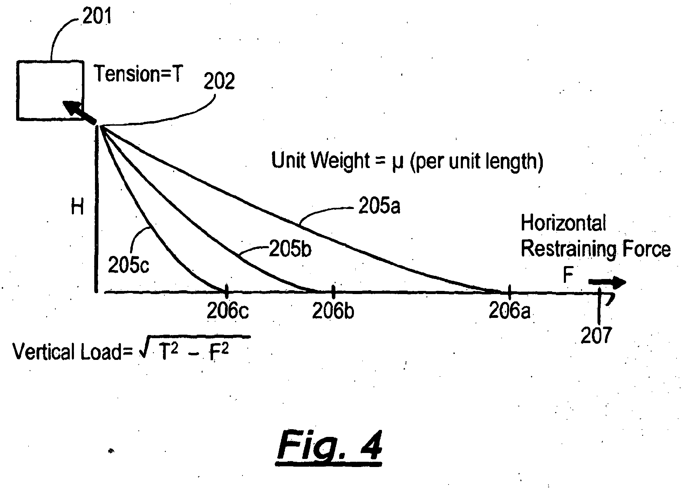

Figure 4 presents a graph of a same mooring line exhibiting three different catenary trajectories 205a, 205b and 205c corresponding to the application of three different values of tension T. The touchdown points (i.e. the points at which the mooring line touches the seabed) for each of the catenary trajectories 205a, 205b and 205c is depicted by the reference numerals 206a, 206b and 206c, respectively. It is noted that as the tension in the mooring line increases the distance between the touchdown point and the anchor position 207 decreases.

With continued reference to Figure 4, for any given mooring line within a given water depth, the horizontal restraining force F is given by the following expression:

$$F = T - H \mu \qquad\qquad (1)$$

where

T - is the tension in the mooring line
H - is the connection point height above the seabed (see Figure 3)
$\mu$ - is the weight per unit length of the mooring line

The horizontal restraining force, F, is constant at any point along the length the mooring line so the tension T varies along the length s of the mooring line from its initial value T (at connection point 202) in accordance with the following equation:

$$T_s^2 = F^2 + V_s^2 \qquad\qquad (2)$$

where $V_s$ - is the vertical load at a distance s along the mooring line.

At a distance s along the mooring line, the vertical load changes in accordance with the following expression

$$V_s = \mu\, s\, g \qquad\qquad (3)$$

where g - represents the gravitational field (i.e. 9.80665 N/kg).

Equations (2) and (3) thus allow the tension $T_s$ and vertical load $V_s$ to be calculated at any point s along the mooring line.

In addition to the above, a horizontal displacement of $\Delta x$ can be calculated from the connection point 202 resulting from a change of $\Delta T = T_0 - T_1$ in the mooring line 205 tension in accordance with the following expression:

$$\Delta x = F \log ((T_0 + V_0)/(T_1 + V_1)) / \mu \qquad\qquad (4)$$

where

$T_0$ - is the initial tension in the mooring line
$V_0$ - is the initial vertical load in the mooring line
$T_1$ - is the tension at a distance $\Delta x$
$V_1$ - is the vertical load at a distance $\Delta x$

A corresponding change in the vertical displacement $\Delta H$ of the connection point 202 can also be calculated from the following equation:

$$\Delta H = (T_0 - T_1) / \mu \qquad\qquad (5)$$

Equations (1) to (5) uniquely define the catenary trajectory formed by a mooring line 205 for a given tension. These equations can also be extended to include combinations of mooring lines 205 of different weights. Significantly however they always produce a unique catenary trajectory for a given tension T.

Referring back to Figure 3, using the theory outlined above a unique set of catenary trajectories for the mooring line 105 can be calculated, each catenary trajectory corresponding to a unique tension T applied to the mooring line 105. Thus a set of unique catenary trajectories for a particular mooring line 105 and seabed profile between the connection point 102 and the anchor point 107 can be accurately modelled. Accordingly, a single measurement of the depth of the mooring line 105 at distance x from the asset 101 is sufficient to identify the appropriate catenary trajectory and thereby determine the tension T within the mooring line 105.

Note that information regarding the seabed may be obtained from charts or echo sounding techniques (for example, using on-board seabed profiling apparatus indicated schematically in Figure 3 by reference numeral 125).

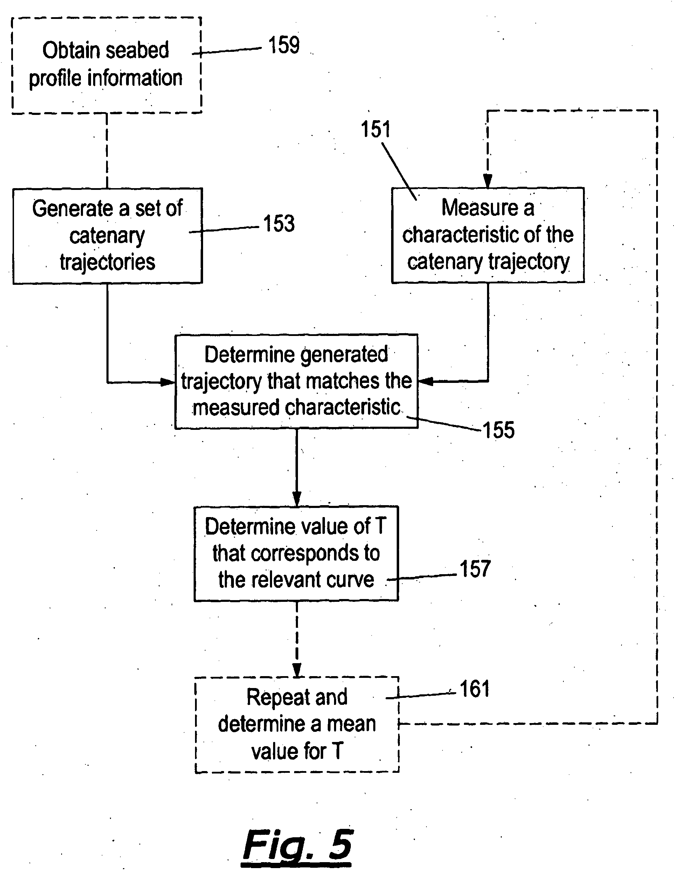

Figure 5 provides a flow diagram illustrative of the method of determining the tension within the mooring line in accordance with an embodiment of the present invention. The method can be seen to comprise a step of measuring a characteristic (or several characteristics) of the catenary trajectory 151, for example by measuring the depth of the mooring line at a known distance from the asset.

The method can also be seen to comprise a step of generating a set of catenary trajectories 153. As one can know the connection point height H and the weight per unit length of the mooring line (as well as information relating to the seabed), a plurality of trajectories can be generated for a range of tension values.

Based on the measured characteristic (or several measured characteristics) the particular generated catenary trajectory that corresponds to that measured characteristic, and hence the actual catenary trajectory, is identified from among all of the generated trajectories 155. From this identified generated trajectory the corresponding tension value is extracted 157.

It will be understood that the order in which the steps are performed may be changed dependent on the circumstances; for example, rather than generating a large set of catenary trajectories corresponding to a wide range of tension values, it may be desirable to generate a more limited set of catenary trajectories once a measurement (e.g. of depth) has already been made to reduce the computational burden of identifying the corresponding catenary trajectory. The process can also include the optional step of obtaining information relating to the profile of the seabed 159 for use in the generation of the set of catenary trajectories.

Another optional step is to repeat the process 161, thus determining several tension values from which a mean tension value can be determined.

It should also be noted that the action of generating a set of catenary trajectories 153 may be carried out well in advance of performing a measurement on the mooring line; for example a comprehensive set of catenary trajectories for a range of parameters may be generated onshore to provide a look-up table that may be utilised offshore. This would reduce computational burden during the actual tension measuring process.

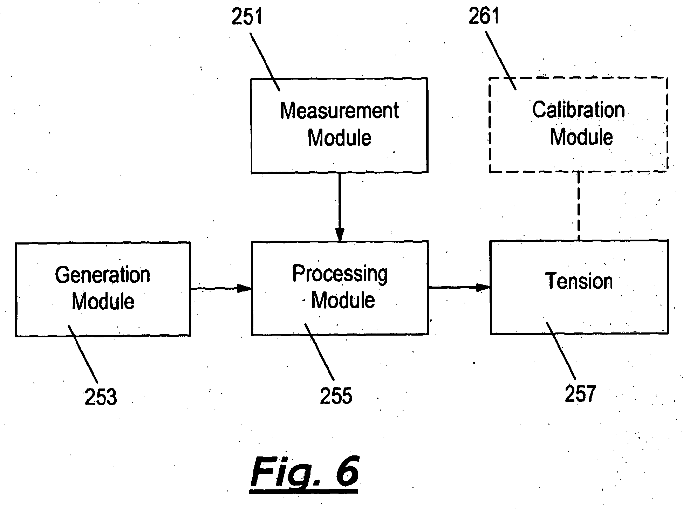

Figure 6 illustrates, in schematic form, a simplified process diagram showing three modules that are comprised in a software implementation for determining the tension within a mooring line in accordance with an embodiment of the present invention. A generation module 253 is provided which is configured to generate a set of catenary trajectories for a range of tension values. A measurement module 251 is also provided which either measures or receives at least one measurement of a characteristic of the actual catenary trajectory formed by the mooring line, e.g. the depth of the mooring line at a particular distance from the asset. Finally, there is provided a processing module 255 which receives the at least one measurement from the measurement module, identifies the corresponding generated catenary trajectory, and provides a tension value as an output 257. An optional calibration module 267 is provided to allow for calibration of one or more tension meters.

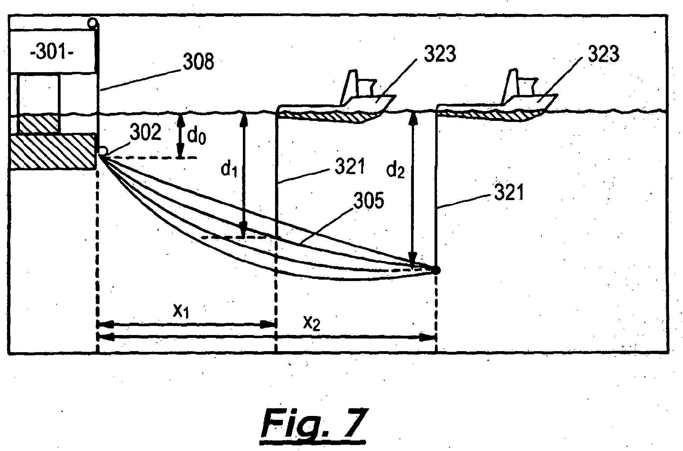

An alternative embodiment of the above method will now be described with reference to Figure 7. Figure 7 again presents a ship 323 from which the depth measurement apparatus 321 is deployed. In this example the profile of seabed is unknown.

In order to identify the tension T in the mooring line 305 in the presently described example, the depth of the mooring line 305 is measured at two different distances $x_1$ and $x_2$ from the marine asset 301. The depth $d_2$ at distance $x_2$ can be thought of as a stationary point in space (guyed in place by the rest of the mooring line 305). Although there exists a number of catenary trajectories that could potentially pass from the connection point 302 $(0, d_0)$ to $(x_2, d_2)$ only one of these can also pass through the first point $(x_1, d_1)$. By employing this double measurement technique the appropriate catenary trajectory can be determined and hence the tension T identified without any knowledge of the seabed or touchdown point.

The accuracy of this method of identifying the tension T of the mooring line 305 may be further increased by taking several measurements along its length; by which a best fit catenary trajectory through all points $(x_n, d_n)$ can be determined by methods known to the skilled person.

Note that if the position of a connection point (e.g. 102,302) on an asset (e.g. 101, 301) is known, only two measurements are required in order to make a determination of the catenary trajectory. Conversely, if the position of a connection point (e.g. 102,302) on the asset (e.g. 101,301) is not known, the catenary trajectory can be determined if at least three measurements of position and depth are obtained. This may be helpful if the position of the measurements can be determined more accurately than the position of the connection point.

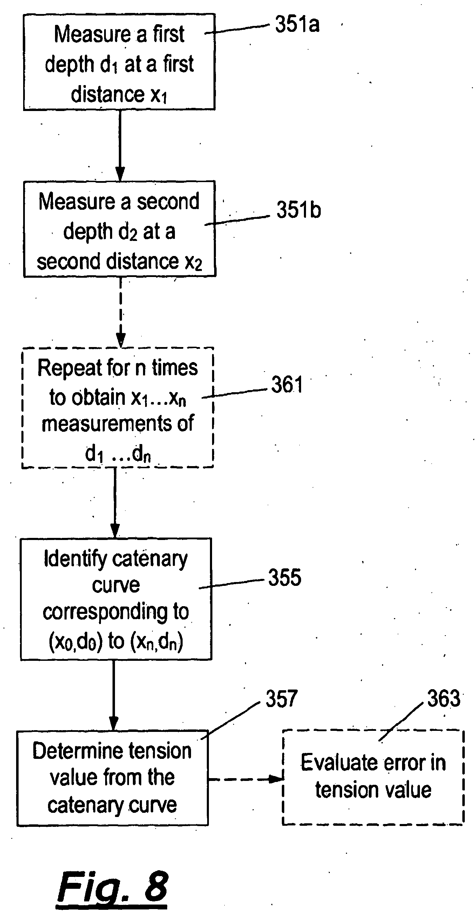

Figure 8 provides a flow diagram illustrative of the alternative method of determining the tension within the mooring line illustrated in Figure 7. The method can be seen to comprise a step of measuring a first depth of the mooring line at a first known distance from the asset 351a, a step of measuring a second depth of the mooring line at a second known depth 351 b, and a step of identifying a catenary trajectory corresponding to the measured depth values 355. Optionally, the measurement steps can be repeated n times to produce n sets of distance and depth values 361, to which a more accurate catenary trajectory can be fitted. From the catenary trajectory, as discussed above, the corresponding tension value can be determined 357.

This method may be less computationally intensive as it does not require the generation of sets of catenary trajectories; rather it makes use of curve-fitting algorithms that are well understood and may be readily implemented. However, it is foreseen that sets of catenary trajectories (either generated or in a look-up table) could be implemented for matching purposes in an alternative embodiment.

As an optional final step, the error in the tension value can be determined 363, via methods well known to the skilled person.

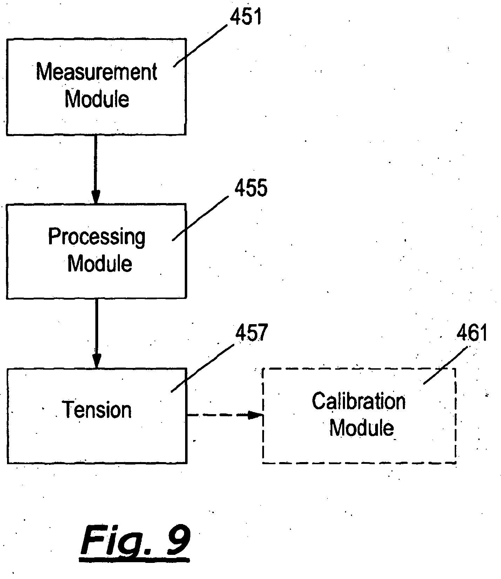

Figure 9 illustrates, in schematic form, a simplified process diagram showing two modules that are comprised in a software implementation for determining the tension within a mooring line in accordance with this alternative embodiment of the present invention. A measurement module 451 is provided which either measures or receives at least two measurements of the depth of the mooring line at known distances from the asset. A processing module 455 receives the at least two measurements from the measurement module 451, performs curve-fitting algorithms on the measurements (as discussed above) to determine a catenary trajectory (or identifies a corresponding generated catenary trajectory), and provides a tension value as an output 457. An optional calibration module 461 is provided to allow for calibration of one or more tension meters.

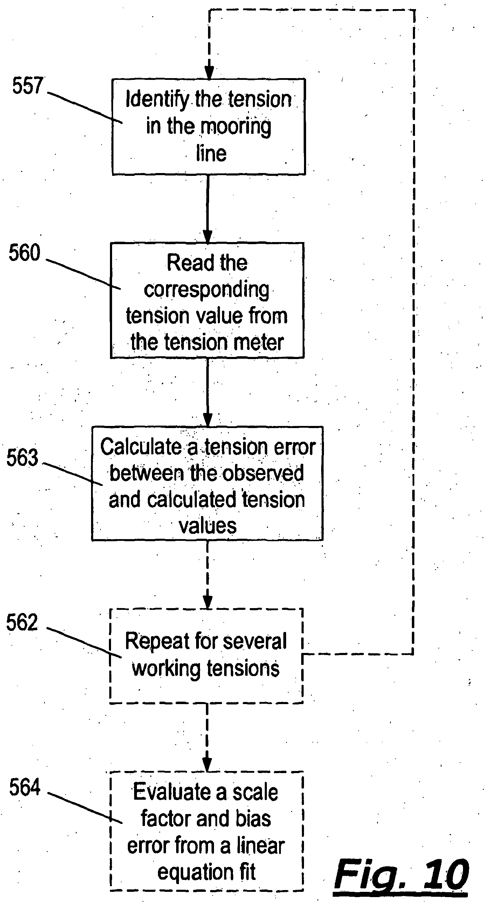

As indicated, the above described methods of identifying the tension T of a mooring line may be employed as a means to calibrate one or more tension meters located upon a marine asset, as illustrated schematically in Figure 10. Firstly, a tension $T_{calc}$ of the mooring line is calculated (or identified) by employing one of the depth measurement techniques described above 557. Subsequently, an observed tension $T_{obs}$ is read from the tension meter 560. Thereafter, it is possible to calculate a tension error $T_{err}$ 563, where $T_{err} = T_{obs} - T_{calc}$.

To account for a scale factor and a bias error of the tension meter it is preferable for the above method to further comprise repeating for a number of alternative working tensions 562 and applying a linear equation fit technique to a graph of $T_{obs}$ versus $T_{err}$ 564.

The gradient of this line provides a scale factor correction for the readings of the tension meter while the intercept with $T_{err}$ axis provide the bias error for the tension meter.

It is preferable for the above calibration process to be performed at a time of relatively calm weather.

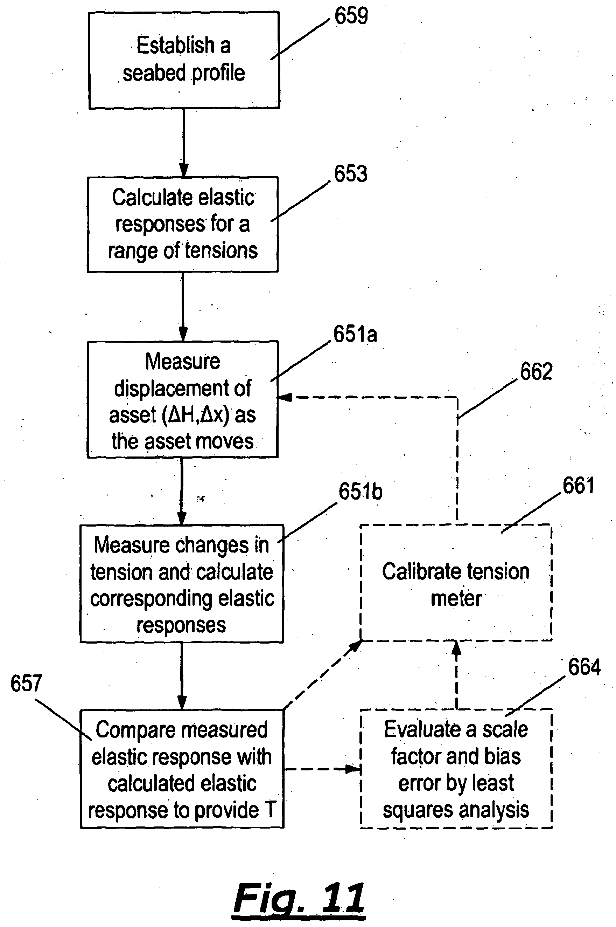

Just as there is a unique catenary trajectory for a mooring line under a given tension T, there is also a unique elastic response exhibited by the mooring line. This allows for a further alternative method of identifying the tension T of a mooring line which is now described in further detail (and with reference to Figure 11).

This alternative method uses knowledge of the seabed profile in order to determine by how much the tension (T) changes for a given movement from the anchor point (e.g. 107). Thus the first stage involves establishing a seabed profile between a connection point and the anchor point 659. A theoretical elastic response $E_{theory}$ (e.g. a change in theoretical tension - $\Delta T_{theory}$ - of a mooring line with this seabed profile for given movements of the connection point relative to the anchor point) is then calculated for a range of tension values 653 (e.g. 10 tonnes to 100 tonnes).

As the marine asset moves under the effects of heave, pitch, roll and yaw the position of the connection point relative to the anchor point changes. High accuracy positioning equipment located on the marine asset provides a means for measuring the vertical $\Delta H$ and horizontal $\Delta x$ displacement of the connection point 651a (which may of course be determined via knowledge of the displacement of the asset). Suitable positioning equipment includes real-time kinematic GPS equipment, which is capable of measuring the position in 3D with accuracy in the order of millimetres; ring laser gyro altitude sensors which is capable of measuring pitch, roll and yaw to an accuracy in the order of 20 millidegrees or greater; GPS gyros equipment which is capable of measuring absolute heading to an accuracy in the order of 20 millidegrees or greater; or combinations of the above. This allows the movement of the fairlead point to be measured with high precision.

A tension meter can then be employed to measure the observed tension $T_{obs}$, and calculate the corresponding changes in the observed tension ($\Delta T_{obs}$) of the mooring line for a positional change. From the change in the observed tension ($\Delta T_{obs}$) and the positional change, the corresponding elastic response ($E_{obs}$) can be calculated 651b. The elastic response $E_{obs}$ can then be used to derive a tension value. In the embodiment described, this is done by comparison of $E_{obs}$ with the theoretical elastic responses $E_{theory}$ in a look up table to output a tension value with a corresponding elastic response 657.

It will be appreciated that the above-described method of determining the tension T of the mooring line may be used to calibrate the tension meter. This calculated tension value can be compared with the observed tension $T_{obs}$ (read from the tension meter). A discrepancy between the observed tension $T_{obs}$ and the tension calculated from $\Delta T_{obs}$ and the elastic response data indicates an incorrect calibration of the tension meter, which can be corrected. In other words, the tension meter can be recalibrated using the elastic response data.

To account for the scale factor and bias errors within the tension meter it is preferable for the above method to further comprise the action of carrying out, for example, a least squares analysis (e.g. a Monte Carlo simulation) between a number of observed results $E_{obs}$ and the theoretical results $E_{theory}$ 664. Scale factors and bias terms are then incorporated within the analysis until a linear fit is achieved between the observed tension changes ($\Delta T_{obs}$) and those predicted by the theoretical models ($\Delta T_{theory}$).

It will be appreciated that the above-described method can be varied within the scope of the invention, by for example calculating a tension value from the observed elastic response from theoretical relationships, rather than relying on a look-up table.

The invention may be implemented in a long term or permanent installation on a marine asset, in which case it may provide a periodic or real-time tension monitoring or calibrations system which periodically or continuously determines the tension in the mooring lines of the marine asset with a high level of accuracy. To effect a periodic, or indeed real-time, calibration method, the various actions may be repeated as indicated schematically by arrow 662 on Figure 11. In this way, not only can a tension meter be calibrated without the need for any down-time or interruption of normal operations, but said calibration can take place regularly, or indeed continuously. This allows the system to provide a three-dimensional catenary map which records and/or displays the catenary position of the moorings in real-time with high positional accuracy. The natural movement of the asset allows periodic or continuous monitoring of the elastic response and periodic or continuous recalibration of the tension meter. It will be appreciated that although such a method is described a calibration, calibration data need not be output from the system. Rather, the calibration of the tension meter following one iteration may be used to correct the observed tension $T_{obs}$ used in a subsequent iteration. It will be appreciated that the data from multiple iterations may be stacked or otherwise combined to improve the statistical accuracy of the method, and in fact the method may make use of real time data over a significant period of time (up to 3 days for example).

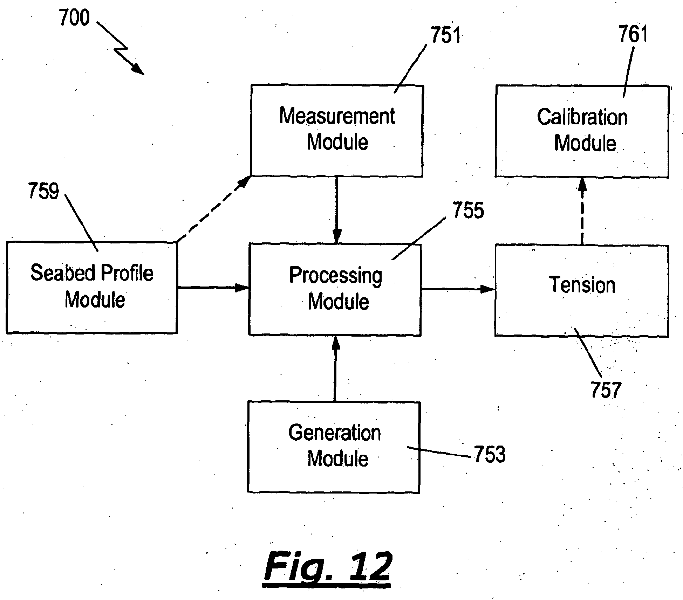

Figure 12 illustrates, in schematic form, a simplified process diagram showing a number of modules that are comprised in a software implementation 700 for determining the tension within a mooring line in accordance with this further alternative embodiment of the present invention. A measurement module 751 is provided which either measures or receives measurements of the displacement of the asset as it moves, as well as measuring or receiving resulting changes in tension. A seabed profile module 759 (which may be comprised in the measurement module) either measures or receives information relating to a profile of the seabed. A generation module 753 generates a set of elastic responses corresponding to a range of tension values.

A processing module 755 receives the various measurements from the measurement module 751, determines and compares the observed elastic response with the generated elastic responses, identifies the actual tension of the mooring line and provides the identified tension value as an output 757. An optional calibration module 761 is provided to allow for calibration of the tension meter from which measurement of the tension changes are obtained, or to simply adjust the measured value of tension $T_{obs}$ used in a subsequent iteration. The software implementation 700 may be configured in a long term or permanent installation on a marine asset, in which case it may provide a periodic or real-time tension monitoring or calibrations system.

Although several different methods for calibrating a tension meter have been described it will be appreciated that more than one of these techniques may be carried out simultaneously or sequentially. A higher degree of certainty and thus safety can therefore be established. In particular it may be desirable to verify the tension reading generated by one method by comparing with a measurement obtained by another method. In this regard, a further alternative embodiment and aspect of the invention is described with below.

The visual calibration method uses image processing to derive the tension in the mooring. For any catenary with a given tension applied, the vertical angle subtended by the chain at the fairlead will be unique. For the visual calibration, the angle subtended at the fairlead is measured. This can be done in several ways but the two preferred methods are described below.

In a first method, the chain is photographed from the side from a survey vessel. The photograph is processed using image processing software. The chain links exposed above the surface of the water are counted by the software and the vertical height of the lower edge of the fairlead above the water level is derived. The angle subtended by the fairlead is then the inverse cosine of the vertical height divided by the exposed chain length. Although the chain will have a slight curve, this will be negligible over the short length of chain exposed.

In an alternative method, a zoom lens is used to photograph the chain from above at a known point at deck level. High resolution expanded images can be analysed to determine the foreshortening of the known link dimensions by comparing with the observed link girth. The angle has to be corrected for the pitch and roll of the vessel but can be determined to a high degree of certainty. Several independent photographs can be similarly analysed to obtain statistical confidence in the result. At the same time as the photographs are taken, tension can be directly observed in the winch room or in the control room. The digital tension meter readings are displayed centrally as well as in the individual winch rooms.

The corrections between observed tensions in the winches and those derived by the visual methods described above can be reduced to derive scale factor terms and bias terms that can be subsequently used over the whole tension range.

Described above are a number of methods for identifying the tension within a mooring line based on determining a characteristic of the associated catenary trajectory. These methods are particularly useful since they provide a simple means for calibrating a tension meter, normally located on a marine asset, attached to the mooring-line. This ensures that the tension in the associated mooring line is sufficient at all times to prevent it from touching any pipelines or other hazards located on the seabed.

A typical application will now be described in the context of the calibration of a tension meter on an offshore semi-submersible drilling rig. As an initial step, a suitably accurate positioning equipment is installed on the rig at a recognisable location. The preferred equipment includes a vector gyro with Differential Global Positioning capability and a pitch and roll sensor. An example of an easily identifiable origin is the centre of the aft end of the catwalk and horizontal offsets from this origin are then measured to the survey equipment and each of the Fairlead positions.

Similarly, in the vertical view the offsets will have a z component from the point of measurement and the sea level. A survey vessel tied alongside measures the water depth to allow for tidal variation.

In order to conduct a calibration, two processes are run in parallel with the rig operations. In this,example the two methods are the visual calibration and the elastic calibration methods.

The visual calibration method, as described above, uses image processing to measure the angle subtended at the fairlead. At the same time as the photographs are taken, tension can be directly observed in the winch room or in the control room. The digital tension meter readings are displayed centrally as well as in the individual winch rooms. The corrections between observed tensions in the winches and those derived by the visual method are reduced to scale factor and bias terms that can be subsequently used over the whole tension range.

The second calibration method used in this example is the elastic response method. A typical process is as follows:

a. For each heading pitch, roll and position the position of each fairlead is calculated;

b. The horizontal and vertical distances from fairlead to anchor are then determined. These need not be absolutely accurate but their relative movement from one observation to the next is important.

c. Changes in tension are compared with their corresponding changes in fairlead position relative to the anchor.

d. A mooring model is used to determine the expected tension increase for a given movement and the observed increase is compared with this.

e. If the observed increase is too small, the scale factor and bias in the tension meter are adjusted to the observed tensions until the elastic response is always consistent with the observed response.

By way of example, an increase in height above the anchor of 2.4m and a shift in distance from the anchor of 1.8 m is expected to raise the tension by 1.4 tons if the original tension was 50 tons. The tension only increases by 1.1 tons so the actual tension in the line is somewhat less that the 50 observed. A software implementation of the above described method applies a variety of biases and scale factors to such observations until over the entire period with all variations in ballast height, tidal height, tidal current drag, thruster forces etc. over a period of a few days, the responses always match the predicted values.

When calibrating an operational rig, the two methods will be used providing a check on the validity of the calibration result.

The principles of the invention may be implemented as part of a real-time positional monitoring system, which periodically or continuously determines the position of the mooring lines of a marine asset in three dimensional space with a high level of accuracy. This may be achieved because the generated catenary curve that is identified as matching the measured (or determined) characteristic is, by definition, the actual catenary curve formed by the mooring line. Accordingly, position may be determined without necessarily determining the tension.

The invention provides a method of calibrating a tension meter arranged to measure the tension in a mooring line of a marine asset is described. The method comprises the step of determining at least one characteristic of the catenary trajectory formed by the mooring line, and determining the tension in the mooring line based on the at least one characteristic. The characteristic may be, for example, shape of the catenary trajectory or elastic response of the mooring line. The determined tension is compared with a corresponding tension measurement from the tension meter to allow the tension meter to be calibrated. The method may be carried out during norman operations of the marine asset, such as drilling or hydrocarbon production. Computer implemented methods are described, as are methods of deriving a position map of the mooring lines. The invention may be implemented in a real-time monitoring system which forms a long-term or permanent feature of the marine asset.

The described methods also offer other significant advantages over those techniques known in the art. Since they may be considered to be non contact techniques they do not require an operator to make any contact with the mooring line, or for the operations of the marine asset to be suspended to allow measurements to be taken. This ability to measure the tension and calibrate the mooring line during normal operations provides significant savings for the operator of the marine asset e.g. an oil rig operator.

The methods described are suitable for use in bad weather, and are sufficiently accurate to allow calibration of a tension meter, even in deepwater and/or for large marine assets used in the hydrocarbon exploration and production industry where typical tensions are in excess of 25 tonnes and typically 40 to 60 tonnes).

# EP 2 616 786 B1

**Claims**

1. A method of calibrating a tension meter arranged to measure the tension in a mooring line (105) of a marine asset (101), the method comprising:

   determining at least one characteristic of the catenary trajectory formed by the mooring line (105),
   determining the tension in the mooring line (105) based on the at least one characteristic; and
   comparing the determined tension with a corresponding tension measurement from the tension meter.

2. The method of claim 1, wherein determining the characteristic of the catenary trajectory formed by the mooring line (105) comprises determining a shape of the catenary trajectory.

3. The method of claim 2, wherein determining the shape of the catenary trajectory comprises:

   calculating a set catenary trajectories between a connection point (102) of the asset and an anchor point (107) of the mooring line (105) for a particular seabed profile;
   measuring a depth of the mooring line (105) at a known distance from the connection point (102), and
   identifying a catenary trajectory corresponding to the known distance and measured depth.

4. The method of claim 2 or claim 3, wherein determining the shape of the catenary trajectory comprises:

   measuring a first depth of the mooring line (105) at a first known distance from a connection point (102),
   measuring a second depth of the mooring line (105) at a second known distance from the connection point (102), and
   identifying a catenary trajectory corresponding to the first and second known distances and measured depths.

5. The method of any preceding claim, wherein determining the characteristic of the catenary trajectory formed by the mooring line (105) comprises determining an elastic response of the mooring line (105).

6. The method of any preceding claim, wherein calibrating the tension meter comprises determining at least one of: a scale factor correction for the tension meter; or a bias error for the tension meter.

7. The method of any preceding claim, wherein determining the tension of the mooring line (108) comprises comparing the at least one characteristic of the catenary trajectory with an appropriate look-up table.

8. The method of any preceding claim, wherein the tension of the mooring line (105) comprises:

   capturing an image of a portion of a mooring line (105) between a connection point (102) on the marine asset (101) and a surface of the water;
   analysing the image in a computer processor to determine the angle subtended by the mooring line (105) at the connection point (102);
   determining the tension in the mooring line (105) from the determined angle.

9. The method of claim 8 comprising determining the vertical height of the connection point (102) of the mooring line (105);

   determining the length of the mooring line (105) between the connection point (102) and the water surface; and
   calculating the angle subtended by the mooring line (105) at the connection point (102) from the height and the length.

10. The method of claim 8 or claim 9 comprising determining the length of the mooring line (105) between the connection point (102) and the water surface by analysing the image in the computer processor (255) to count the number of chain links between the connection point (102) and the water surface.

11. The method of any of claims 8 to 10 comprising analysing the foreshortening of the chain links in the computer processor (255) to determine the angle subtended by the mooring line (105) at the connection point (102).

12. The method of any preceding claim, wherein the method is carried out during normal operations of the marine asset (101).

13. A method of determining the position of one or more mooring lines (105) of a marine asset (101), the method comprising carrying out the method of any of claims 1 to 12, and deriving the position of the one or more mooring lines (105) from a determined tension.

14. A method of monitoring the position of one or more mooring lines (105) of a marine asset (101), the method comprising:

calibrating a tension meter of the marine asset (101) according to the methods of any one of claims 1 to 12 at a first time;
determining the position of the one or more mooring lines (105) at the first time;
recalibrating the a tension meter of the marine asset (101) according to the methods of any one of claims 1 to 12 at a second later time; and
determining the position of the one or more mooring lines (105) at the second later time.

15. A computer program for instructing a computer to perform the method of any preceding claim when executed.

**Patentansprüche**

1. Verfahren zum Kalibrieren eines Vorspannungsmessgeräts, das angeordnet ist, um die Vorspannung eines Festmachers eines maritimen Wertobjekts zu messen, wobei das Verfahren Folgendes umfasst:

Ermitteln wenigstens einer Eigenschaft des Kettenlinienverlaufs, der vom Festmacher gebildet wird;
Ermitteln der Vorspannung im Festmacher anhand der wenigstens einen Eigenschaft; und
Vergleichen der ermittelten Vorspannung mit einem entsprechenden Vorspannungsmesswert aus dem Vorspannungsmessgerät.

2. Verfahren nach Anspruch 1, wobei die Ermittlung der Eigenschaft des Kettenlinienverlaufs, der vom Festmacher gebildet wird, die Ermittlung einer Form des Kettenlinienverlaufs umfasst.

3. Verfahren nach Anspruch 2, wobei die Ermittlung der Form des Kettenlinienverlaufs Folgendes umfasst:

Berechnen mehrerer Kettenlinienverläufe zwischen einem Verbindungspunkt des Wertobjekts und einem Befestigungspunkt des Festmachers für ein bestimmtes Meeresbodenprofil:

Messen einer Tiefe des Festmachers in einem bekannten Abstand vom Verbindungspunkt; und
Identifizieren eines Kettenlinienverlaufs, die dem bekannten Abstand und der gemessenen Tiefe entspricht.

4. Verfahren nach Anspruch 2 oder 3, wobei die Ermittlung der Form des Kettenlinienverlaufs Folgendes umfasst:

Messen einer ersten Tiefe des Festmachers in einem ersten bekannten Abstand von einem Verbindungspunkt;
Messen einer zweiten Tiefe des Festmachers in einem zweiten bekannten Abstand vom Verbindungspunkt; und
Ermitteln eines Kettenlinienverlaufs, der dem ersten und zweiten Abstand und den gemessenen Tiefen entspricht.

5. Verfahren nach einem der vorangegangenen Ansprüche; wobei die Ermittlung der Eigenschaft des Kettenlinienverlaufs, der vom Festmacher gebildet wird, die Ermittlung einer elastischen Reaktion des Festmachers umfasst.

6. Verfahren nach einem der vorangegangenen Ansprüche, wobei das Kalibrieren des Vorspannungsmessgeräts die Ermittlung wenigstens eines von beidem umfasst: eine Skalenfaktorkorrektur für das Vorspannungsmessgerät; oder einen Bias für das Vorspannungsmessgerät.

7. Verfahren nach einem der vorangegangenen Ansprüche, wobei die Ermittlung der Vorspannung des Festmachers das Vergleichen der wenigstens einen Eigenschaft des Kettenlinienverlaufs mit einer geeigneten Nachschlagtabelle umfasst.

8. Verfahren nach einem der vorangegangenen Ansprüche, wobei die Vorspannung des Festmachers Folgendes umfasst:

Erstellen eines Bildes eines Teils des Festmachers zwischen einem Verbindungspunkt am maritimen Wertobjekt und einer Oberfläche des Wassers;

Analysieren des Bildes in einem Computerprozessor, um den Winkel zu ermitteln, der vom Festmacher am Verbindungspunkt geschnitten wird;

Bestimmen der Vorspannung im Festmacher anhand des bestimmten Winkels.

**9.** Verfahren nach Anspruch 8 umfassend die Ermittlung der vertikalen Höhe des Verbindungspunkts des Festmachers; Ermitteln der Länge des Festmachers zwischen dem Verbindungspunkt und der Wasseroberfläche; und Berechnen des Winkels, der vom Festmacher am Verbindungspunkt geschnitten wird, aus der Höhe und Länge.

**10.** Verfahren nach Anspruch 8 oder 9 umfassend die Ermittlung der Länge des Festmachers zwischen dem Verbindungspunkt und der Wasseroberfläche durch Analyse des Bildes im Computerprozessor, um die Zahl der Kettenglieder zwischen dem Verbindungspunkt und der Wasseroberfläche zu ermitteln.

**11.** Verfahren nach einem der Ansprüche 8 bis 10 umfassend die Analyse der Verkürzung der Kettenglieder im Computerprozessor, um den Winkel zu ermitteln, der vom Festmacher am Verbindungspunkt geschnitten wird.

**12.** Verfahren nach einem der vorangegangenen Ansprüche, wobei das Verfahren während des normalen Betriebs des maritimen Wertobjekts angewandt wird.

**13.** Verfahren zum Ermitteln der Position eines oder mehrerer Festmacher eines maritimen Wertobjekts, wobei das Verfahren die Anwendung des Verfahrens nach einem der Ansprüche 1 bis 12 und die Ableitung der Position eines oder mehrerer Festmacher aus der ermittelten Vorspannung umfasst.

**14.** Verfahren zum Überwachen der Position eines oder mehrerer Festmacher eines maritimen Wertobjektes, wobei das Verfahren Folgendes umfasst:

Kalibrieren eines Vorspannungsmessgeräts des maritimen Wertobjekts nach den Verfahren eines der Ansprüche 1 bis 12 zu einem ersten Zeitpunkt;

Ermitteln der Position eines oder mehrerer Festmacher zu diesem ersten Zeitpunkt;

erneutes Kalibrieren des Vorspannungsmessgeräts des maritimen Wertobjekts nach den Verfahren eines der Ansprüche 1 bis 12 zu einem zweiten späteren Zeitpunkt; und

Ermitteln der Position eines oder mehrerer Festmacher zu dem zweiten späteren Zeitpunkt.

**15.** Computerprogramm zum Anweisen eines Computers, das Verfahren eines der vorangegangen Ansprüche anzuwenden, wenn das Programm ausgeführt wird.

**Revendications**

**1.** Méthode pour calibrer un tensiomètre disposé pour mesurer la tension d'une amarre d'un navire, la méthode comprenant :

la détermination d'au moins une caractéristique de la trajectoire caténaire formée par l'amarre ;

la détermination de la tension dans l'amarre à partir d'au moins une caractéristique ; et

la comparaison de la tension déterminée à une tension correspondante mesurée par le tensiomètre.

**2.** La méthode de la revendication 1, dans laquelle la détermination de la caractéristique de la trajectoire caténaire formée par l'amarre comprend la détermination de la forme de la trajectoire caténaire.

**3.** La méthode de la revendication 2, dans laquelle la détermination de la forme de la trajectoire caténaire comprend :

le calcul d'un ensemble de trajectoires caténaires entre un point de connexion du navire et un point d'ancrage de l'amarre pour un profil particulier du fond marin ;

la mesure de la profondeur de l'amarre à une distance connue du point de connexion ; et

l'identification d'une trajectoire caténaire correspondant à la distance connue et à la profondeur mesurée.

**4.** La méthode de la revendication 2 ou de la revendication 3, dans laquelle la détermination de la forme de la trajectoire caténaire comprend :

la mesure d'une première profondeur de l'amarre à une première distance connue du point de connexion ;
la mesure d'une seconde profondeur de l'amarre à une seconde distance connue du point de connexion ; et
l'identification d'une trajectoire caténaire correspondant à la première et à la seconde distances connues et profondeurs mesurées.

**5.** La méthode d'une revendication précédente, dans laquelle la détermination de la caractéristique de la trajectoire caténaire formée par l'amarre comprend la détermination de la réaction élastique de l'amarre.

**6.** La méthode d'une revendication précédente, dans laquelle la calibration du tensiomètre comprend la détermination d'au moins une correction de facteur d'échelle pour le tensiomètre ou une correction d'erreur pour le tensiomètre.

**7.** La méthode d'une revendication précédente, dans laquelle la détermination de la tension de l'amarre comprend la comparaison d'au moins une caractéristique de la trajectoire caténaire à un tableau de consultation approprié.

**8.** La méthode d'une revendication précédente, dans laquelle la tension de l'amarre comprend :

la photographie d'une partie de l'amarre entre un point de connexion sur le navire et la surface de l'eau ;
l'analyse de la photo dans un ordinateur pour déterminer l'angle sous-tendu par l'amarre au point de connexion ;
la détermination de la tension dans l'amarre à partir de l'angle déterminé.

**9.** La méthode de la revendication 8, comprenant la détermination de la hauteur verticale du point de connexion de l'amarre ;

la détermination de la longueur de l'amarre entre le point de connexion et la surface de l'eau ; et
le calcul de l'angle sous-tendu par l'amarre au point de connexion à partir de la hauteur et de la longueur.

**10.** La méthode de la revendication 8 ou de la revendication 9, comprenant la détermination de la longueur de l'amarre entre le point de connexion et la surface de l'eau en analysant la photo dans l'ordinateur afin de compter le nombre des chaînons entre le point de connexion et la surface de l'eau.

**11.** La méthode de l'une des revendications 8 à 10, comprenant l'analyse du rapprochement des chaînons dans l'ordinateur pour déterminer l'angle sous-tendu par l'amarre au point de connexion.

**12.** La méthode d'une revendication précédente dans laquelle la méthode est effectuée pendant les opérations normales du navire.

**13.** Une méthode pour déterminer la position d'une ou plusieurs amarres d'un navire, la méthode comprenant l'une des méthodes des revendications 1 à 12, et le calcul de la position d'une ou plusieurs amarres à partir d'une tension déterminée.

**14.** Une méthode de contrôle de la position d'une ou plusieurs amarres d'un navire, la méthode comprenant :

la calibration d'un tensiomètre de navire selon les méthodes de l'une des revendications 1 à 12 la première fois ;
la détermination de la position d'une ou plusieurs amarres la première fois ;
une nouvelle calibration d'un tensiomètre de navire selon les méthodes de l'une des revendications 1 à 12 une seconde fois plus tard ; et
la détermination de la position d'une ou plusieurs amarres une seconde fois plus tard.

**15.** Un programme d'instruction d'ordinateur pour exécuter la méthode de l'une des revendications précédentes.

**Fig. 1**
**(Prior Art)**

**Fig. 2**
**(Prior Art)**

**_Fig. 3_**

201

Tension=T 202

Unit Weight = µ (per unit length)

H

205a

Horizontal
Restraining Force

205b

F

205c

206c 206b 206a

207

Vertical Load= $\sqrt{T^2 - F^2}$

*Fig. 4*

Obtain seabed profile information — 159

Generate a set of catenary trajectories — 153

Measure a characteristic of the catenary trajectory — 151

Determine generated trajectory that matches the measured characteristic — 155

Determine value of T that corresponds to the relevant curve — 157

Repeat and determine a mean value for T — 161

_**Fig. 5**_

251

261

Measurement
Module

Calibration
Module

Generation
Module

Processing
Module

Tension

253

255

257

_**Fig. 6**_

**_Fig. 7_**

Measure a first
depth $d_1$ at a first
distance $x_1$ —— 351a

Measure a second
depth $d_2$ at a
second distance $x_2$ —— 351b

Repeat for n times
to obtain $x_1...x_n$
measurements of
$d_1 ...d_n$ —— 361

Identify catenary
curve
corresponding to
$(x_0,d_0)$ to $(x_n,d_n)$ —— 355

Determine tension
value from the
catenary curve —— 357

Evaluate error in
tension value —— 363

## Fig. 8

451

Measurement
Module

455

Processing
Module

457

Tension

461

Calibration
Module

*Fig. 9*

557 — Identify the tension in the mooring line

560 — Read the corresponding tension value from the tension meter

563 — Calculate a tension error between the observed and calculated tension values

562 — Repeat for several working tensions

564 — Evaluate a scale factor and bias error from a linear equation fit

*Fig. 10*

```
┌─────────────────┐
│   Establish a   │ ╱ 659
│  seabed profile │
└─────────────────┘
         │
         ▼
┌─────────────────┐
│ Calculate elastic│ ╱ 653
│ responses for a │
│ range of tensions│
└─────────────────┘
         │
         ▼
┌─────────────────┐
│    Measure      │ ╱ 651a
│ displacement of │                              ╱ 662
│ asset (ΔH,Δx) as │◄ - - - - - - - - - ┐
│ the asset moves │                    │
└─────────────────┘                    │
         │                             │
         ▼          ╱ 651b       ┌ ─ ─ ─ ─ ─ ─ ─ ─ ┐  ╱ 661
┌─────────────────┐              │  Calibrate tension │
│ Measure changes in│            │      meter       │
│ tension and calculate          └ ─ ─ ─ ─ ─ ─ ─ ─ ┘
│ corresponding elastic│          ▲          ▲
│    responses    │              ╱           │
└─────────────────┘             ╱            │      ╱ 664
  657 ╲        │               ╱             │
       ╲       ▼              ╱        ┌ ─ ─ ─│─ ─ ─ ─ ┐
┌─────────────────┐                   │  Evaluate a scale │
│ Compare measured │                  │  factor and bias │
│ elastic response with - - - - - - ► │  error by least  │
│ calculated elastic│                 │ squares analysis │
│ response to provide T│              └ ─ ─ ─ ─ ─ ─ ─ ─ ┘
└─────────────────┘
```

# *Fig. 11*

700

751 Measurement Module

761 Calibration Module

759 Seabed Profile Module

755 Processing Module

Tension

757

Generation Module

753

*Fig. 12*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3722268 A
- US 3810081 A
- WO 2007079556 A
- GB 1241776 A
- US 20090084302 A